(19) Europäisches Patentamt / European Patent Office / Office européen des brevets

(11) **EP 2 792 101 B1**

(12) **EUROPEAN PATENT SPECIFICATION**

(45) Date of publication and mention
of the grant of the patent:
**07.09.2016 Bulletin 2016/36**

(51) Int Cl.:
*H04L 9/08* (2006.01)    *G06F 17/30* (2006.01)
*G06F 21/60* (2013.01)

(21) Application number: **12858144.4**

(22) Date of filing: **16.11.2012**

(86) International application number:
**PCT/IB2012/056490**

(87) International publication number:
**WO 2013/088282 (20.06.2013 Gazette 2013/25)**

(54) **DELETION OF CONTENT IN STORAGE SYSTEMS**

LÖSCHUNG VON INHALT IN SPEICHERSYSTEMEN

SUPPRESSION DE CONTENU DANS DES SYSTÈMES DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2011 EP 11193651**

(43) Date of publication of application:
**22.10.2014 Bulletin 2014/43**

(73) Proprietor: **International Business Machines
Corporation
Armonk, NY 10504 (US)**

(72) Inventors:
• **CACHIN, Christian**
**8803 Rueschlikon (CH)**
• **HAAS, Robert**
**8803 Rueschlikon (CH)**
• **HAFNER, Alexis**
**8803 Rueschlikon (CH)**
• **KURMUS, Anil**
**8803 Rueschlikon (CH)**
• **SORNIOTTI, Alessandro**
**8803 Rueschlikon (CH)**

(74) Representative: **Richardt Patentanwälte PartG
mbB
Wilhelmstraße 7
65185 Wiesbaden (DE)**

(56) References cited:
JP-A- 2000 089 991        US-A- 5 584 022
US-A1- 2008 175 391       US-A1- 2009 013 406
US-A1- 2009 172 265       US-A1- 2009 196 417

• GIOVANNI DI CRESCENZO ET AL: "How to Forget
a Secret", LECTURE NOTES IN COMPUTER
SCIENCE (LNCS), SPRINGER VERLAG, DE, vol.
1563, 1 March 1999 (1999-03-01), pages 500-509,
XP008173893,
• DOMINIK GROLIMUND ET AL: "Cryptree: A
Folder Tree Structure for Cryptographic File
Systems", RELIABLE DISTRIBUTED SYSTEMS,
2006. SRDS '06. 25TH IEEE SYMPOSIUM ON,
IEEE, PI, 1 October 2006 (2006-10-01), pages
189-198, XP031031946, ISBN: 978-0-7695-2677-5
• HIDENORI KUWAKADO ET AL.: 'Strongly
Non-Separable Encryption Mode for Throwing a
Media Away' IEICE TECHNICAL REPORT vol. 103,
no. 417, 07 November 2003, pages 15 - 18,
XP008173708
• GIOVANNI DI CRESCENZO ET AL.: 'How to Forget
a Secret' LECTURE NOTES IN COMPUTER
SCIENCE vol. 1563, March 1999, pages 500 - 509,
XP008173893

**Description**

FIELD OF THE INVENTION

The invention relates to the field of computer science, and more specifically, to a computerized system, a method, a program and a data storage medium for storing objects encrypted based on one or more keys and providing for the deletion of a key.

BACKGROUND

Secure data deletion often features as a requirement in a number of domains. As an example, privacy and data protection regulations of different countries have agreed on a set of common principles. Among those, "purpose" and "security" are particularly relevant, as it appears from Directive 95/46/EC of the European Parliament and of the Council of 24 October 1995 on the protection of individuals with regard to the processing of personal data and on the free movement of such data, and from the OECD guidelines on the protection of privacy and transborder flows of personal data. The principle of "purpose" states that personal data can be stored only for purposes agreed by the data owner, and that once this purpose is no longer valid, data should be erased. Coupled with the security principle, that mandates that data should be kept secure from any potential abuses. It is clear that the legislator requires special care in the handling of "expired" data. Indeed, access to data whose purpose is expired would clearly represent a violation of both principles.

This is even truer when the information at hand belongs to particularly sensitive domains such as healthcare and finance. In this case, the numerous existing regulations require to avoid any unauthorized exposure of confidential corporate and government data by imposing fines and even civil and criminal liability. This is the case for example for the Health insurance portability and accountability act in 1996, the Financial services modernization act in 1999, the Public company accounting reform and investor protection act in 2002, and the Fair and accurate credit transactions act in 2003, of the US Congress.

Retaining data too long therefore increases the risks of unwanted disclosure, for instance through a security breach or by subpoena. The truth of this statement is backed up by the number of incidents whereby companies have lost sensitive data. Such incidents are related in different news articles and studies, such as the ones by J. Vijayan entitled "Programmer who stole drive containing 1 million bank records gets 42 months", Computer World, 2008, or by D. Sharp, entitled "Breach exposes 4.2 million credit, debit cards", Associated Press, 2008, or by J. Evers, entitled "Credit card breach exposes 40 million accounts", CNET News 2005. The 2010 annual study entitled "U.S. cost of a data breach" by Symantec Corporation in 2011 showed that the average cost of such a data breach is in the order of millions of dollars, and that this cost is rising over time.

These simple facts show how information that is no longer required can only become a liability for a company, and that an important goal of IT systems in the corporate world should be the ability of disposing of information in a secure way.

Standard OS deletion primitives do not offer a solution to the problem of secure deletion. Indeed, a deletion operation such as *unlink()* and *remove()* in Unix operating systems only remove the reference to a file from the filesystem data structure, leaving the actual data on the physical disk.

A first known approach towards secure file deletion is overwriting. However, if done naively, overwriting may still leave magnetic traces of past data in the disk. Gutmann et al. showed how secure deletion can be achieved by overwriting the content using certain patterns that are adapted to the low-level encoding mechanism of drives (P. Gutmaun, "Secure deletion of data from magnetic and solid-state memory", in Proceedings of the 6th USENIX Security Symposium, pages 77-89, 1996). However, a number of problems affect this solution. Firstly, large files cannot be deleted efficiently. Secondly, if files are replicated to increase their availability, or backed up, the burden of deletion increases linearly in the number of copies.

In addition, tools like *wipe, eraser* and *shred* developed for known operating systems work only if the overwrite patterns apply to the actual physical device at hand, if the patterns are actually being written to disk (and not only to cache), and if the writes are targeted to the disk sectors that contained the data. Without detailed knowledge of the media at hand, ensuring the first condition is hard. The second condition can be ensured in a complicated way, through an OS-level or disk-level write barrier, write cache flush, or by disabling the write cache. With respect to the third condition, enforcing write locality is quite hard in modem file system. Indeed, journaling file systems, such as, for instance, JFS, ReiserFS, XFS, Ext3, perform write operations on journals and not directly to disk. Other filesystems write redundant, others take disk snapshots or cache data in temporary locations. Furthermore, it has been shown by M. Wei, L. M. Grupp, F. M. Spada, and S. Swanson in their paper entitled "Reliably erasing data from flash-based solid state drives", in Proceedings of the 20th USENIX Security Symposium, 2011, that none of the available disk overwrite techniques are effective if data is stored on different media, such as solid-state drives. Generally, many storage systems have many layers. The problem is that knowledge of lower-layer implementation mechanisms is lacking and the interfaces do not contain methods for instructing a lower layer to securely delete data.

A number of works have attempted to implement overwriting-based techniques as an automatic feature of existing filesystems. In the paper by Bauer and N. B. Priyantha entitled "Secure data deletion for linux file systems", in Proceedings of the 10th conference on USENIX Security Symposium - Volume 10, SSYM'OI, pages 12-12, Berkeley, CA, USA, 2001, USENLX Association, the authors present an implementation of an overwrite-based secure deletion extension for the ext2 filesystem. The system is based on a separate daemon carrying out an asynchronous overwrite of blocks that have been marked as deleted. This work has the shortcoming of only supporting an outdated, non-journaled filesystem. In the papers by N. Joukov, H. Papaxenopoulos, and E. Zadok entitled "Secure deletion myths, issues, and solutions", in Proceedings of the second ACM workshop on Storage security and survivability, StorageSS '06, pages 61-66, New York, NY, USA, 2006, ACM, and by N. Joukov and E. Zadok entitled "Adding secure deletion to your favorite file system", in Poceedings of the Third IEEE International Security in Storage Workshop, pages 63-70, Washington, DC, USA, 2005, IEEE Computer Society, the authors present a solution for secure deletion based on intercepting deletion calls and translating them with link()/unlink() operations that move files in a specified folder. Then, the shred utility is asynchronously used on these files. All these works share the shortcomings of overwrite-based approaches highlighted above.

In their paper entitled "A revocable backup system", in proceedings of the 6th conference on USENIX Security Symposium, Focusing on Applications of Cryptography - Volume 6, pages 9-9, Berkeley, CA, USA, 1996, USENIX Association, D. Boneh and R. J. Lipton present an approach for deletion of content - in particular backed-up off-line content. The key idea the authors propose is to encrypt all the content that may require secure deletion, and - upon secure deletion request - carry out a deletion of the keys instead of the deletion of the file content. The authors also introduce the support for versioned backups. However, using such a system translates to the requirement of managing a number of cryptographic keys for each individual file.

The idea of leveraging on cryptography to achieve secure deletion has been picked up by a number of subsequent works. In the paper by Z. N. J. Peterson, R. Bums, J. Herring, A. Stubblefield, and A. D. Rubin entitled "Secure deletion for a versioning file system", in proceedings of the 4th conference on USENIX Conference on File and Storage Technologies - Volume 4, pages 11-11, Berkeley, CA, USA, 2005, USENIX Association, the authors present a solution to support secure deletion in a versioning filesystem, based on the idea of adding short, cryptographically computed tags to a file: the deletion of the tag implies the impossibility to recover the file. However, differently from keys, tags are public and can be stored and replicated as normal data.

In the paper entitled "The ephemerizer: making data disappear", Technical report, Sun Microsystems, Inc., Mountain View, CA, USA, 2005, Perlman presents the concept of the ephemerizer: a semi-trusted third party that creates and advertises public keys, and guarantees their secure deletion after a predefined amount of time. This way, users can encrypt the session keys used to encrypt messages for one another, using one of the keys of the ephemerizer, with the assurance that after their expiration time, these keys will no longer be available. In the paper entitled "File system design with assured delete", in proceedings of the Third IEEE International Security in Storage Workshop, pages 83-88, Washington, DC, USA, 2005, IEEE Computer Society, the same author presents a solution where such idea can be used to implement a filesystem. This work, however, pays the penalty of being built on a solution initially designed for encryption of messages between different users.

In the paper by R. Geambasu, T. Kohno, A. A. Levy, and H. M. Levy. entitled "Vanish: increasing data privacy with self-destructing data", in proceedings of the 18th conference on USENIX security symposium, SSYM'09, pages 299-3 16, Berkeley, CA, USA, 2009, USENIX Association, the authors show how the churn rate of DHT-based peer-to-peer systems can be used to achieve secure deletion. Their solution requires content to be encrypted using a cryptographic key, and such key needs to be split in shares using for instance Shamir's approach exposed in the paper by A. Shamir entitled "How to share a secret", Commun. ACM, 22:612-613, November 1979. Then, the different shares of the key can be distributed to random users of a DHT. Since users will naturally disappear from the DHT, and given that keys are only stored in non-persistent memory, after a certain amount of time the key will no longer be available. However the scheme can be attacked by exploiting well-known sybil attacks on DHTs, as explained in the paper by Wolchok, Hofmann, Heninger, Felten, Halderman, Rossbach, Waters, and Witchel entitled "Defeating Vanish with low-cost Sybil attacks against large DHTh", in proc. 17th Network and Distributed System Security Symposium (NDSS), ISOC, Feb. 2010.

An approach, thereafter referred to as Di Crescenzo et al.'s approach, that constitutes an approach for an abstraction of the secure deletion problem, is now presented. This approach is also described in the paper by Di Crescenzo, N. Ferguson, R. Impagliazzo, and M. Jakobsson entitled "How to forget a secret", in proceedings of the 16th annual conference on Theoretical aspects of computer science, STACS'99, pages 500-509, Berlin, Heidelberg, 1999, Springer-Verlag.

The method comprises building an erasable memory of arbitrary size from an external erasable memory of small, constant size and standard (non-erasable) memory of arbitrary size. The idea is centered around a key tree: each node of the tree is associated to a cryptographic key. No key is stored in plaintext in the tree, but it is stored after having been encrypted with the key associated to its parent node (encrypting a key being also called key-wrapping). The key associated to the root is stored in the external erasable memory, whereas the other values are stored in the standard memory.

The key tree is a complete n-ary tree and the $N = n^m$ values that require secure deletion are arranged as leaves of this tree: the leaves are therefore the only nodes whose values are actual data and not cryptographic keys. The data associated to the leaves is encrypted using the key of each node's parent node.

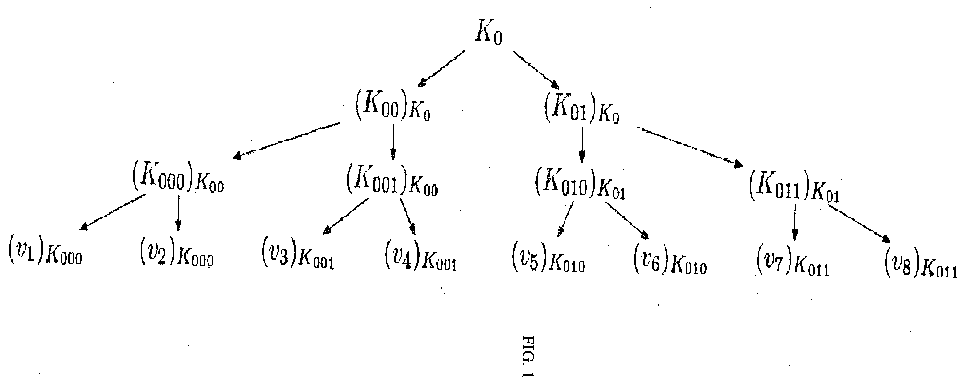

FIG. 1 represents the instantiation of such a tree, a binary one in the example, used to encrypt eight values $v_1,..., v_8$. By $(A)_B$ we refer to the value A encrypted - through symmetric encryption - using $B$ as the key.

When a value requires secure deletion, the following operations are executed over the tree: for each node in the path between the node requiring deletion and the root, 1) a new value is drawn from the keyspace and is wrapped using the new unwrapped value of its ancestor; and 2) the value of each of its siblings is re-wrapped using the new unwrapped value of the ancestor. The same happens for the key associated to the root of the tree. In addition, since such key is stored on a securely erasable memory, its retrieval after the deletion operation is impossible. The node requiring secure deletion is not reencrypted. This way, its secure deletion is guaranteed since its decryption would require - thanks to the property of the tree - access to the old value of the root, which is no longer possible by definition, as it is stored in the erasable memory.

Using Di Crescenzo et al.'s approach, a solution for secure deletion of files in a storage service scenario could possibly be built. To this end, the values considered before the leaves of the tree may be Key-Encrypting Keys (KEKs), that are used to encrypt File-Encrypting Keys (FEKs). Files that require secure deletion can be encrypted using a FEK, and the FEK is only stored wrapped with the corresponding KEK. When the file requires secure deletion, a deletion operation is invoked on the corresponding KEK. The file may be deleted lazily afterwards.

This solution is ill-suited for secure deletion of files in a storage service scenario. First of all, the key-tree is over-dimensioned since all but the nodes at m - 1 in an $m$-level tree are actually used to encrypt content. Secondly, as described in the previous section, the actual content is arranged as leaves of the tree and each leaf is encrypted using the key associated to its father. This implies that $n$ sibling nodes are encrypted using the same key in an $n$-ary tree. However, given that a secure deletion of a node requires the reencryption of its siblings, in the solution presented in Di Crescenzo et al.'s approach, applied to file storage, the secure deletion of a file would entail the reencryption of other, possibly very large files. In addition Di Crescenzo et al.'s approach assumes that temporary cleartext values resulting from the reencryption process should be stored in the erasable memory. This may however result in large portions of data being stored in the erasable memory, or in the requirement of a very high I/O bandwidth. Finally, the scheme can only handle deletion of single data units. However this does not fit a scenario with the requirement of deletion of a large set of files that have common semantics.

Patent document US 2009/0172265 A1 to Park et al. discloses a device having a secure flash file deletion function.

D. Grolimund et al, "Cryptree: A Folder Tree Structure for Cryptographic File Systems" discloses a secure cryptographic tree structure which facilitates access control in file systems.

Patent document US 5,584,022 A1 to Kikuchi et al. discloses an enciphered file sharing method. Patent document JP 2000089991A to Ishikawa discloses a method of forming multi-hierarchism of folders in a file system.

Patent document US 2009/0196417 to Beaver et al. discloses a data storage device which has a built-in encryption function using a self-generated encryption key.

There is thus an urge for an improved solution for deleting objects stored on a storage system of a computerized system.

BRIEF SUMMARY OF THE INVENTION

According to one aspect, the invention is embodied as a computerized system comprising a storage system storing objects and attribute values associated to the objects. The attribute values are organized according to a set of N attribute types, N ≥ 1, such that for each of said attribute types an object can be associated with an attribute value. Each of said attribute types is associated to a respective graph. Each node of the respective graph is associated to a key. Said key is wrapped with a key associated to a parent node of said each node except for a root node; and associated to one attribute value for the attribute type corresponding to the respective graph. And each of the objects is stored encrypted based on one or more keys, each of said one or more keys being associated to one attribute value that is associated with said each of the objects. The system also comprises key management means configured for deleting a key.

In examples, the computerized system may comprise one or more of the following features:

- one of the attribute types corresponds to a filesystem tree mapped onto a filesystem of the computerized system, wherein each node of the filesystem tree is associated with an attribute value uniquely identifying a directory or a file of the filesystem, such that said each nodes corresponds to a directory or a file of the filesystem; and a key wrapped with a key associated to a parent node of said each node except for a root node, wherein, files of the filesystem corresponding to respective leaf nodes of the filesystem tree are encrypted, each, based on a key associated to a respective leaf node of the filesystem tree;

- said files of the filesystem corresponding to respective leaf nodes of the filesystem tree are encrypted, each, based on at least two keys, one of said two keys being associated to a respective leaf node of the filesystem tree and another one of said two keys being associated to another attribute type than that corresponding to the filesystem tree;
- each object is encrypted based on at least two keys, each associated with respective attribute values of different types;
- each object is encrypted using a single key, said single key being obtained based on said at least two keys;
- each object is encrypted using a single key, said single key being obtained via a one-way function taking said at least two keys as input, such as a hash function of a concatenation of said at least two keys;
- one of the attribute types corresponds to a user, such that distinct attribute values for this type correspond to distinct users;
- one of the attribute types corresponds to time, such that distinct attribute values for this type preferably correspond to distinct years or distinct retention period;
- each of the objects is stored encrypted based on an all-or-nothing transform, wherein a part of each of the objects is encrypted based on said one or more keys.

According to another aspect, the invention is embodied as a computer-implemented method of securely managing objects stored in the above computerized system, comprising a step of deleting a key of a tree, thereby preventing from deriving again each of keys previously wrapped with the deleted key, and accessing any object encrypted based on at least said deleted key.

The method may further comprises steps, prior to the step of deleting, of selecting a given node in a tree; creating a new key distinct from the key associated so far with that node, for associating the new key with that node; wrapping keys associated to child nodes of that node with the new key. And the step of deleting comprises deleting the key associated so far with that node.

According to another aspect, the invention is embodied as a computer program comprising instructions for configuring a computerized system having a storage system as the above computerized system, or for performing the above method.

According to another aspect, the invention is embodied as a computer readable storage medium having recorded thereon the computer program.

BRIEF DESCRIPTION OF THE DRAWINGS

A system and a process embodying the invention will now be described, by way of non-limiting example, and in reference to the accompanying drawings, where:

- FIG. 1 represents the instantiation of a key tree of the prior art;
- FIG. 2 shows a flowchart of an example of the method of securely managing objects stored in the computerized system;
- FIGS. 3 and 4 represent the instantiation of a key tree of an example of the computerized system;
- FIG. 5 shows a graphical representation of a third example of the computerized system;
- FIG. 6 represents an example of the computerized system.

DETAILED DESCRIPTION OF THE EMBODIMENTS

As will be appreciated by one skilled in the art, aspects of the present invention may be embodied as a computerized system, method for using or configuring the system, or computer program product for performing the method. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(a) (i.e., data storage medium(a)) having computer readable program code recorded thereon.

Any combination of one or more computer readable medium(a) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium, i.e., data storage medium, may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the likes and conventional procedural programming languages, such as the "C" programming language or similar programming languages. The program code may be executed entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner. The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

It is provided a computerized system comprising a storage system storing objects and attribute values associated to the objects. The attribute values are organized according to a set of $N$ attribute types, $N \geq 1$, such that, for each of said attribute types, an object can be associated with an attribute value. Each of said attribute types is associated to a respective graph. Each node of the respective graph is associated to a key. Said key is wrapped with a key associated to a parent node of said each node except for a root node. Also, said key is associated to one attribute value for the attribute type associated to the respective graph. Each of the objects is stored encrypted based on one or more keys. Each of said one or more keys is associated to one attribute value that is associated with said each of the objects. The computerized system also comprises key management means configured for creating, managing and/or deleting a key. Such a system improves the deletion of objects stored on the storage system.

By "computerized system", it is meant any type of system having computing capacities, for example a system having a hardware processor. For example, it is meant a desktop computer or a laptop computer. The computerized system comprises a storage system. The storage system consists of any means for storing data such as a hardware memory comprising non-volatile and/or volatile parts. The storage system of the contemplated computerized system actually stores (i.e. is adapted to store) objects and attribute values associated to the objects (possibly one value per attribute type and per object, optionally at most). The objects consist of a quantity of data forming a unity. For example, the objects are files (e.g. computer files) and/or directories. The attribute values merely designate values of attribute types. The attribute values thus constitute data associated to the objects. By "associated", it is meant that the system stores links, or pointers, from the objects to the attribute values and/or vice-versa, so as to retrieve the attribute value(s) associated to one object and/or the object(s) associated to one value of one attribute. The attribute values are organized according to a set of $N$ attribute types. The attribute types are features characterizing the objects. In other words, for each stored object, one or more attribute values are stored associated to this object, in an organized way (i.e. the attribute type corresponding to the attribute value being retrievable). For each of said attribute types, an object can be associated with an attribute value. In other words, there are *N* attribute types, and for each of them one value corresponding to a given object is stored associated to that object. There may notably be a one-to-one mapping between sets of attribute values of all the attribute types and objects (i.e. each object has one, and at most one, attribute value for each attribute type). $N \geq 1$ means that *N* is any non-zero natural number.

Each of said attribute types is associated to a respective graph (the storage system is thus further adapted to store such graph and possibly stores it - at a given time). Each node of the respective graph is associated to a key (also stored on the storage system), according to a bijection (one, and only one, key per node of the graph). Said key is itself wrapped (i.e. encrypted) with a key associated to a parent node, e.g. according to the graph hierarchy, of said each node except for a root node. In other words, each node of the graph points to a key (i.e. data used to encrypt other data, e.g. according to an encryption algorithm) which is encrypted (e.g. according to an encryption algorithm) with the key of the parent node. This means that the graph is a directed graph, each arc thereby having a starting node (i.e. the parent node) and an ending node (i.e. the child node). This also means that a given key of the graph (i.e. associated to a node of the graph) is not usable as such. It must first be decrypted using the key of the parent node of that node to which the given key is associated. The only case for which this does not hold is the case of the key associated to the root node of the graph, i.e. a node for which there is no parent node. Having a root node and directed arcs, the graph may possibly be a tree graph.

Also, said key is associated to one attribute value for the attribute type corresponding to the respective graph. In other words, a key of a graph is associated to an object, and more particularly to an attribute value of that object corresponding to the attribute type of the graph. Thus, the computerized system offers an optimal use of the graph data, compared to Di Crescenzo et al.'s approach. Indeed, all nodes of the graph are associated to a key, which is itself associated to a data (attribute value, associated to an object, in the present case), and not only the leaf nodes. Thus, a key which is associated to a non-leaf node, is used both to encrypt data (i.e. an attribute value of an object) and to wrap another key (i.e. the key associated to the child node).

Then, each of the objects is stored encrypted based on one or more keys (e.g. after running an encryption algorithm on at least a part of the object, the algorithm taking said one or more keys as parameter(s)). Each of said one or more keys is associated to one attribute value that is associated with said each of the objects. In other words, the objects are not stored as such on the storage system but are encrypted, so as to be hidden, based on respective keys each associated to one or more attribute values of the object, each attribute value corresponding to a respective attribute type. In order to read (i.e. access to the contents of) an object, one or more keys is (are) necessary (as well as the encryption algorithm, which may of course also be stored, or known to the one trying to read the objects). It is thus possible to securely delete an object by deleting at least one of the one or more keys. Indeed, if one of the "one ore more keys" is deleted, the object may not be decrypted anymore. And the computerized system actually comprises key management means configured for deleting a key. Keys are easier to delete than objects, and they are also easier to manage and to control.

Now, because the keys are organized according to a directed graph, each key associated to a node being wrapped by a key associated to a parent node, the system provides for deleting a key associated to a node by deleting in fact a parent key, or any other ancestor key. Indeed, each node of the graph has a parent node (except for the root node) and is associated to one given key being wrapped by the key associated to the parent node. Thus, if one deletes the key associated to an ancestor node, the given key may not be decrypted anymore. The method thus provides for a secure and efficient deletion system.

Indeed, it is provided a method of securely managing objects stored in the computerized system. The method comprises a step of deleting a key of a graph. The graph is one of the respective graphs to which an attribute type is associated. The deleted key is thus the one associated so far to a given node of the graph. Thereby, the method prevents from deriving again each of keys (previously) wrapped with the deleted key. And the method thus also prevents from accessing any object encrypted based on at least said deleted key.

The method may further comprises, prior to the step of deleting, steps of selecting a given node in a graph (the node of the graph to which the key to be deleted is associated), creating a new key distinct from the key associated so far with that node (the new key has a different value from the key to be deleted), for associating the new key with that node (the new key thus replaces the key to be deleted); and wrapping keys associated to child nodes of that node with the new key. In other words, the keys associated to nodes that are children of the given node (the one to which the key to be deleted is associated) are re-wrapped, using the new key (whereas they were wrapped using the value of the key to be deleted so far). Grand-children, and further generations of descent, may also be re-wrapped in the same way. In other words, the wrapping may be iterated over the descent of the given node (i.e. the node associated to the key deleted by the method). The step of deleting may in that case comprise deleting the key associated so far with that node.

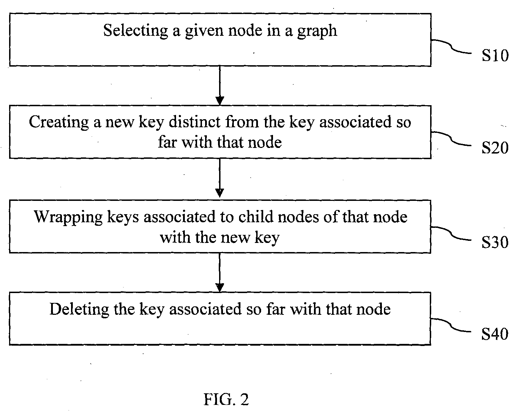

FIG. 2 illustrates an example of such a method with the step of deleting (S40) a key of a graph, which comprises deleting the key associated so far with that node, and prior to the step of deleting (S40), the steps of selecting (S10) a given node in a graph, creating (S20) a new key distinct from the key associated so far with that node, for associating the new key with that node; and wrapping (S30) keys associated to child nodes of that node with the new key.

Now, the keys associated to at least a few initial levels, preferably the root node, of each graph may be stored in an external erasable memory, with no cached, journaled and/or snapshot versions of them in a standard memory, whereas the other keys may be stored in the standard memory in any way, the standard memory being of arbitrary size, larger than the erasable memory. The external erasable memory is any memory which offers a high level of security with regards to deletion of contents thereon. The initial levels of a graph are the first levels of a graph. The first level of a graph is its root node. The second level of the graph comprises the children of the root node. And so on. By "at least a few initial levels", it is thus meant consecutive levels including the root node, but not comprising all the node levels.

In this case, the computerized system offers an efficient and secure deletion of content. Indeed, it is possible to make access to an object impossible (i.e. delete the object) by deleting any key, in the erasable memory, that is associated to a node that lies in the path between any node to which a key associated to any of the attribute values of the object (the object being stored encrypted based on that key) and the root node of the same graph. In order to keep other objects intact, it is possible to change the value of the key to be deleted and re-encrypt any data stored based on that key (other than the object to be deleted), such as the keys associated to descendant nodes, and objects encrypted based thereon. The computerized system may indeed provide means therefore. The computerized system may also support the creation of new objects and the provisioning of new attribute types or attribute values.

In a first example, one of the attribute types may correspond to a filesystem tree mapped onto a filesystem of the computerized system. In other words, one of the attribute types may be associated to a tree mirroring the filesystem tree. The respective graph is thus a tree having the structure of the filesystem tree for such attribute type. In such case, each node of the filesystem tree is associated with an attribute value uniquely identifying a directory or a file of the filesystem, such that said each node corresponds to a directory or a file of the filesystem. Indeed, the objects may be files and directories of a filesystem. Thus, the attribute values associated to the graph may for example be or correspond to pathnames of files or directories. Said each node of the filesystem tree is further associated with a key wrapped with a key associated to a parent node of said each node except for a root node, as explained before. Files of the filesystem corresponding to respective leaf nodes of the filesystem tree are encrypted, each, based on a key associated to a respective leaf node of the filesystem tree. Keys associated to leaf nodes of the tree thus comprise file encrypting keys (FEK), whereas the other keys are key encrypting keys (KEK), and may thus encrypt directories. Indeed, the objects which are files necessarily correspond to leaves of the tree. This allows a faster processing of the deletion. Indeed, a user generally deletes files or directories from a filesystem. Having such a graph structure for the encrypting keys makes deletion faster.

Said files of the filesystem corresponding to respective leaf nodes of the filesystem tree may be encrypted, each, based on at least two keys. For example, said files may be encrypted, each, based on $N$ keys, $N > 1$. One of said two keys may be associated to a respective leaf node of the filesystem tree. The other one of said two keys may be associated to another attribute type than the one that corresponds to the filesystem tree. In other words, at least two keys, each associated to a different attribute type (one of them uniquely identifying a directory or a file of the filesystem), may encrypt an object. This ensures that secure deletion may be performed by identifying the object to be deleted via different ways (via different attribute types), thereby making the system more convenient for deleting contents.

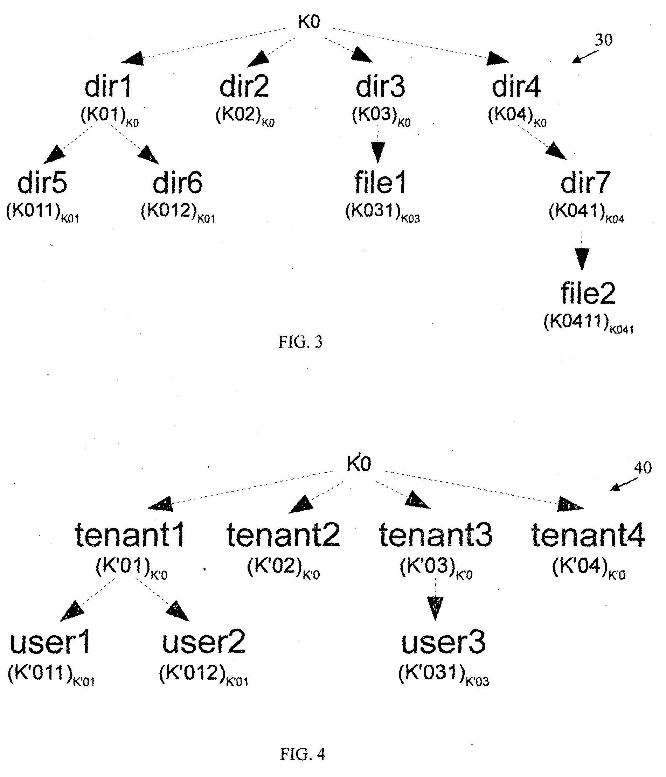

FIG. 3 illustrates this first example. FIG. 3 shows a graph which is a filesystem tree 30 mapped onto a filesystem of the computerized system. The storage system of the computerized system stores objects and attribute values associated to the objects, wherein the attribute values are organized according to a set of N attribute types, $N \geq 1$, such that for each of said attribute types an object can be associated with an attribute value. One of said attribute types is associated/corresponds to filesystem tree 30. Filesystem tree 30 can be mapped onto the filesystem of the computerized system, which has directories and files. Each node of the filesystem tree 30 is associated with an attribute value uniquely identifying a directory or a file of the filesystem, such as a pathname represented by references 'dir1', 'die2', ..., 'dir7' for directories and 'file1' and 'file2' for files on FIG. 3, such that said each nodes corresponds to a directory ('dir1', 'dir2', ..., 'dir7') or a file ('file1', 'file2') of the filesystem. Each node of the filesystem tree 30 is also associated and with a key K0, K01, K02, K03, K04, K011; K012, K031, K041, K0411. Keys associated to a non-root node K01, K02, K03, K04, K011; K012, K031, K041, K0411 are wrapped with a key associated to a parent node K01, K03, K04, K041. The root node is associated to a key K0 which is not wrapped with any other key. On FIG. 3 (also true for FIG. 4 described later), a key A that is wrapped with another key B is noted as $A_B$ for indicating such wrapping relationship.

Files 'file1' and 'file2' of the filesystem corresponding to respective leaf nodes of filesystem tree 30 are encrypted, each, based on a key (K031 and K0411) associated to a respective leaf node of filesystem tree 30. In other words, file 'file1' is encrypted based on key K031 and file 'file2' is encrypted based on key K0411.

In a second example, possibly combined with the first example, each object is encrypted based on at least two keys, each associated with respective attribute values of different type. For example, said objects may be encrypted, each, based on N keys, $N > 1$. This ensures more convenience for performing deletion, as explained earlier.

FIG. 4 illustrates the instantiation of a key tree other than the one provided in FIG. 3. In other words, FIG. 4 shows a graph as tree 40 that is associated to an attribute type of the storage system different from the one of FIG. 3.

Each object stored by the storage system of the computerized system may be encrypted based on two keys, one associated with the attribute value associated to filesystem tree 30 of FIG. 3, and the other one associated with the attribute value associated to tree 40 of FIG. 4.

Tree 40 is associated to an attribute type corresponding to ownership of objects of the storage system. Attribute values may be 'tenant1', 'tenant2', 'tenant3', 'tenant4', 'user1', 'user2', 'user3', and objects may belong to any of 'tenant1', 'tenant2', 'tenant3', 'tenant4', 'user1', 'user2', 'user3'. Each node of tree 40 is associated to a key K'0, K'01, K'02, K'03, K'04, K'011, K'012, K'031. Said key is wrapped with a key associated to a parent node of said each node except for a root node, as explained with reference to FIG. 3. Said key is also associated to one attribute value for the attribute type "ownership" (key K'0 that is associated to the root node being associated to the *null* value).

When the objects are for example elements of a filesystem (i.e. files or directories), the computerized system may comprise a storage system storing the elements, values 'dir1', 'die2', ..., 'dir7', 'file1', 'file2' uniquely identifying a directory or a file of the filesystem, and values 'tenant1', 'tenant2', 'tenant3', 'tenant4', 'user1', 'user2', 'user3' of ownership of the elements, as well as filesystem tree 30 of FIG.3 and tree 40 of FIG. 40 that store the key structures for keys K0, K01, K02, K03, K04, K011; K012, K031, K041, K0411 and K'0, K'01, K'02, K'03, K'04, K'011, K'012, K'031. The storage system also stores each file based on a key of tree 30 and a key of tree 40. This way it is possible to efficiently delete e.g. a file by retrieving it based on its position in the filesystem and/or its ownership.

Now, options for both the first and the second examples are discussed.

Each object may be encrypted using a single key. Said single key may be obtained based on said at least two keys. For example, the single key encrypting an object may be obtained by a key derivation function applied to the at least two keys based on which the object is encrypted. Said single key may be obtained for example via a one-way function taking said at least two keys as input, such as a hash function of a concatenation of said at least two keys.

A suitable function can also be obtained via any cryptographically secure key derivation function that takes as input $N > 1$ keys and generates as output a single key that depends on each of the input bits.

One of the attribute types may correspond to a user, such that distinct attribute values for this type correspond to distinct users. In other words, one of the attribute types provides information relative to user, the different values referring to different users, such as user ownership. In an example, one of the attribute types corresponds to a filesystem tree, and another attribute type corresponds to a user ownership.

One of the attribute types may correspond to time, such that distinct attribute values for this type preferably correspond to distinct years or distinct retention period.

The computerized system thus offers a scheme that - by leveraging the basic idea in Di Crescenzo et al.'s approach - builds a tailored solution for the problem of secure deletion in a storage system. The key idea of the first example is that, if we one is approaching the problem of secure deletion for storage, one cannot be dependent on an external, logical key structure, but one had better couple such key structure with the filesystem. The first insight is that - by coupling the key tree with the filesystem tree - one can obtain a more suitable solution for a storage problem.

In addition, the computerized system may also offer a scheme that supports high-performance secure deletion operations at different granularity and across different dimensions. A dimension may correspond to any grouping of files with a particular common semantic. For instance, the computerized system may support secure deletion of an entire folder sub-tree, or of the files belonging to a single user of the system, at the cost of a single secure deletion operation in the key-tree. The key idea behind this solution is that one can build multiple, separate key-trees, and require files to be encrypted with a combination of a key belonging to each tree.

In the following, two practical implementations of the computerized system are presented, corresponding to the first and second examples discussed earlier.

The first approach presented is based on the observation that a filesystem can already be represented as a tree of files contained in directories.

The solution is structured as follows: each file is encrypted using a file-encrypting key (FEK); file-encrypting keys are stored in the metadata of their containing folders, wrapped with the key-encrypting key (KEK) associated to the folder. The KEK of each folder is in turn wrapped using the KEK associated to its parent folder and stored in the metadata of the latter; this is repeated until the root folder is reached. The root folder is associated to the root of the key tree.

We shall first of all note that we are no longer shaping the tree as a complete *n*-ary tree, but as a (most likely incomplete) tree of arbitrary size and structure. In this implementation approach, each folder is associated to a non-leaf node in the tree, which represents the KEK of that folder; which node in particular depends on the position of the folder in the filesystem hierarchy (e.g. /a/a could be mapped to the first child node of the first child node of the root of the key tree). Each file is associated to a leaf node in the tree, which represents that file's FEK. Each folder stores in its local metadata all KEKs and FEKs of files and folders contained within itself, wrapped using its own KEK, which in turn is stored in its parent's metadata.

Upon requirement of secure deletion for a file, or for the files belonging to a folder, the file(s) are normally unlinked, whereas the keys associated to them are securely deleted by changing the KEK of the parent folders, up to the one of the root folder.

This approach has a number of advantages: first of all, since keys are stored in the metadata of the same filesystem, the reliability of key storage is equal to the reliability of the file storage. This way, a loss of a key due to - for instance - a disk failure also very likely implies a loss of a file, and vice versa. Second, this solution exploits the natural design of filesystems: when accessing a given file in a given path, the operating system traverses the metadata of each folder in order to reach the desired file. Caching is used to improve performances and avoid disk accesses for frequently visited paths/files. The same approach lends itself well to handle the keys in our system, since they can be stored in the same metadata objects consulted upon file access and cached in the same way. A secure deletion operation would require to invalidate this cache and erase its content, which could be handled internally by the PS implementation.

The second example in turn offers a flexible deletion using multiple key hierarchies.

The simple solution sketched relative to Di Crescenzo et al.'s approach is not suitable for storage-based systems. Indeed, the scheme can only handle deletion of single data units, and does not land itself well in a scenario where the deletion of a (potentially large) set of files has to be handled at once. One might argue that this can be done by pruning an entire subtree, but this solution is again sub-optimal if elements that require deletion cannot be grouped contiguously in the leaf set, or - more importantly - if single elements are required to belong to multiple deletion sets.

Indeed, an additional requirement may be the ability to delete, efficiently and at once, all the files e.g. belonging to a given user, without any assumption on an organized placement of files (e.g. all files of a user contained within a single folder or bucket). This would increase the required dimensions to three. Additional dimensions may be sub-tenants and tenants in a multi-tenancy system.

Note that this requirement is all but irrelevant: indeed a strong requirement of large enterprise-level storage systems is the support for user migration, which translates in the requirement for efficient copy of content from a storage solution to another, with the associated demand for secure deletion of content within the former, in order to be able to guarantee that no old copy of the data still exists. Deleting at once the potentially large number of files owned by a single user is therefore a critical requirement.

The computerized system of the second example therefore presents a scheme that - by potentially leveraging the basic idea presented in the first example - builds a tailored solution for the problem of secure deletion in a storage system. The key idea is to adopt different trees in order to increase the dimensions and the granularity of the deletion operation.

To this end the computerized system may build (and store) a so-called forest of $n$ separate trees, where $n$ represents the number of orthogonal dimensions; for instance, a 2-dimensional space with two trees serves to cover secure deletion of single files and all files within a folder. A 3-dimensional space with three trees may be used to address single files, files within a folder and all files belonging to a given user. The situation may easily be extended to cover more complex scenarios.

In Di Crescenzo et al.'s approach, a single KEK is used to wrap (i.e. to encrypt) a single FEK, which is in turn used to encrypt the desired file. In our solution the single FEK is encrypted using $n$ keys, one belonging to each separate tree. In order to achieve this, the $n$ keys are combined together using a secure key derivation function $F: \{ 0, 1 \}^{k \times n} \rightarrow \{\{0, 1\}^k$, where $k$ is the required key length. We thus say that the actual KEK - which was a single key from a single tree before - is now computed using the function $F$ applied on $n$ keys, one from each tree.

Let $T_i, = \{E_n, V_n\}$, $i \in [1, n]$ be the $i$-th tree; also, let $id_i \in [1, n]$ be an attribute type, e.g. a string, that identifies a given file within the $i$-th dimension (e.g. the name of the file, the name of the bucket, or the name of the owning user). Let a mapping function $M_i : id_i \rightarrow E_i$, $i \in [1, n]$ map the given identifier of a file in the $i$-th dimension to an element in the $i$-th tree. Each KEK can thus be obtained by applying the mapping functions first, in order to determine the set of keys that are required; then the key derivation function can be used on such set to generate the key. The algorithm can be seen as:

| **Algorithm 1** Key-Encrypting Key derivation algorithm |
|---|
| 1: **function** constructKey ($\{id_1,....id_n\}$) : $K$ |
| 2: $K_{set} \leftarrow \perp$ |
| **3: for** $i$ = 1 to $n$ **do** |
| 4: $\quad K_{set} \leftarrow K_{set} \cup M_i(id_i)$ |
| 5: **end for** |
| 6: **return** $F(K_{set})$ |
| 7: **end function** |

In order for the scheme to be more viable and secure, $F$ may be a pseudo-random function (so that the output still meets the criteria required to be a cryptographic key) and may involve each key from each tree in the generation of the output, in such a way that the key cannot be recovered if a single value is missing. Candidates for such function may be processing each key with a key derivation function, as mentioned before, such as a block cipher.

If secure deletion is required, at first the associated dimension $i$ is identified; then the mapping $M$, is applied to the string that identifies the deletion request (e.g. the user name $id_i$ for secure deletion of all files belonging to a user) to identify the element $el_i$ in $T_i = \{E_i, n_i\}$. Then, this element is securely deleted from the tree applying the steps described referring to Di Crescenzo et al.'s approach. As a consequence of the way the scheme was built, none of the files that were identified by $id_i$, in dimension $i$ can be recovered after the deletion of the key mapped to element $el_i$, in tree $T_i$.

We have thus described a viable solution to the problem of secure deletion for corporate storage systems. We have present two different examples, possibly combined, thus providing a complete solution for the problem.

The first example illustrates how secure deletion can be implemented efficiently within a filesystem tree at minimum cost while maximizing the integration with the filesystem.

The second example addresses the requirements of efficient secure deletion in complex systems where efficient deletion of single files is not enough: indeed, by building a flexible solution that supports arbitrary number of deletion "dimension", we can cover several practical scenarios.

Now, little has been said about how the objects are stored encrypted. This may of course be performed in any way known to the one skilled in the art. Alternatively, in a third example, possibly combined with the first and second example, each of the objects may be stored encrypted based on an all-or-nothing transform, for example by having already been encrypted by their owner for a purpose independent to that of secure deletion (e.g. to protect its confidentiality). In other words, the objects are previously encrypted, based on an all-or-nothing transform, i.e. an encryption algorithm under which data may be decrypted only if the whole encrypted data is retrievable. The computerized system may then provide for encrypting only a part of each of the objects (already encrypted once) based on said one or more keys (in other words, a second encryption occurs, that second encryption only concerning a part of each of the objects). This makes the encryption more efficient.

This leverages the fact that - in many workloads - clients already perform encryption of their data prior to upload to the storage service provider. This is true because, in examples of the method, i) clients may perform client-side encryption to achieve confidentiality of their data also against the storage provider and ii) numerous regulations mandate encryption of sensitive data (e.g. credit card information).

Given this assumption, the intuition behind the third example is the following: if the client side encryption layer ensures that the loss of a small portion of the data is equivalent to the loss of the entire data, then encrypting this small portion *another time* with a key devoted to secure deletion achieves the objective. Indeed, using this idea, it is now possible to encrypt a small portion of a set of files with a single key. Secure deletion of a single file within a set implies picking a new key for that set and reencrypting the small portions of the files that do not require secure deletion.

It is therefore possible to perform some real tradeoff between number of reencryptions and number of keys, since FEKs - that prevented any optimization as explained earlier - are now replaced by portions of the file received from the user.

This solution requires an encryption layer that ensures that the loss of a small portion of the data is equivalent to the loss of the entire data. These cryptographic constructs are known as all-or-nothing transforms, such as the ones first introduced by Ronald Rivest in his paper entitled "All-or-nothing encryption and the package transform", in FSE, page 210-218, 1997.

Rivest's construct ensures that if a single block of data is lost, the original plaintext cannot be reconstructed, not even in part.

Assuming that the client applies an all-or-nothing transform, the scheme operates as follows. Let $F$ be the set of files that require secure deletion and let $S = \{s_0,..., s_n\}$ be $n$ sets of files of cardinality $m$. By construction, $|F| = n \times m$. A surjection $F: F \rightarrow S$ is defined assigning each file $f$ to a set in $S$. Let $K = \{k_0,..., k_n\}$ be a set of $n$ keys. A bijection $K: S \rightarrow K$ is defined, assigning single keys to single sets.

Each file comes at the storage provider in an encrypted way; any given file $f$, is composed of a variable number of ciphertext blocks $b_i$; as said, decryption is only possible if all blocks are available. Upon reception of a file from a client, the service provider encrypts a single, pre-defined block (for simplicity we shall identify this block as $\overline{b}$) as follows:

$$\overline{b}_{enc} = E(K(F(f)), \overline{b})$$

In short, the ciphertext block $\overline{b}$ is encrypted again using the key mapped to the set to which the file belongs. The reencrypted block is stored in lieu of the original block, which is destroyed instead.

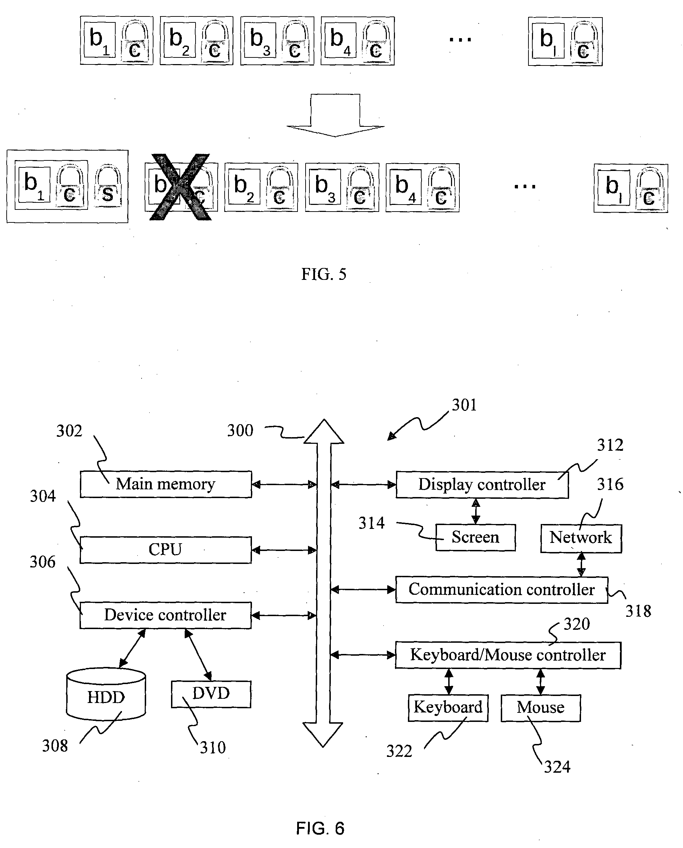

FIG. 5 shows a graphical representation of the idea: the first row of blocks represents the original file, encrypted by the client using an all or nothing transform that generates $l$ blocks of ciphertext. The first block is elected for reencryption using a key controlled to the server: the reencrypted block is stored and the original one is destroyed.

The room for optimization resides in the parameters $n$ and $m$: if the cardinality of files to be securely deleted is constant, by making *n* grow we are accepting to store more keys as a price for faster secure deletion operations; conversely, by making *m* grow, we are accepting to have less efficient secure deletion operations in order to be able to store less keys.

Rivest's all-or-nothing transform ensures that the loss of any block of ciphertext results in the impossibility of decrypting the original data. For the purpose of secure deletion however, the computerized system only requires that the loss of a specific block of ciphertext results in the impossibility of decryption.

We can leverage this fact to build a simpler form of all-or-nothing transform. This simplified version is built on a specific mode of operation of block ciphers called PCBC. Such mode is presented by A. J. Menezes, P. C. van Oorschot, and S. A. Vaustone in their book entitled "Handbook of Applied Cryptography", CRC Press, 2001.

Simply put, this mode of operation ensures that if the *i*-th ciphertext block is lost, nothing but the first *i*-1 blocks can be decrypted. This feature can be used by encrypting the first block of ciphertext with the key used for secure deletion: if the entire file requires deletion, the key used for encryption of the block is deleted and as a consequence, the entire file can no longer be reconstructed.

Special care is however required, since if the entropy of the original cleartext block is low, the block can be reconstructed bypassing the encryption. Therefore the first block ought to be constructed from the output of a pseudo-random function applied to the content of the whole file. Prepending the hash of the cleartext to the file itself is an example of how this may be achieved in practice.

Such a computerized system thus provides a practical solution to enable the use of cryptography for secure deletion. Indeed, as cryptography does represent a viable solution to the problem of secure deletion, it comes with the intrinsic problem of having to manage cryptographic keys. The latter often constitutes a hindering factor for practical systems, as the accidental loss of a key may give raise to legal liabilities or the loss of reputation.

However unfortunately decreasing the number of keys is not feasible as it translates to highly inefficient implementations. We have showed how client-side encryption can be leveraged to drastically reduce the number of keys with no decrease in both performance or flexibility.

FIG. 6 is a block diagram of hardware of a computerized system according to an embodiment of the invention. A computerized system 301 according to an embodiment of the invention includes a CPU 304 and a main memory 302, which are connected to a bus 300. The bus 300 is connected to a display controller 312 which is connected to a display 314 such as an LCD monitor. The display 314 is used to display information about a computer system. The bus 300 is also connected to a storage device such hard disk 308 or DVD 310 through a device controller 306 such as an IDE or SATA controller. The bus 300 is further connected to a keyboard 322 and a mouse 324 through a keyboard/mouse controller 310 or a USB controller (not shown). The bus is also connected to a communication controller 318 that conforms to, for example, an Ethernet (registered trademark) protocol. The communication controller 318 is used to physically connect the computer system 301 with a network 316.

Main memory 302 may be erasable memory on which at least a few initial levels of each graph may be stored, possibly the whole graph. Notably, main memory 302 may store tree 30 of FIG. 30 and tree 40 of FIG. 4. Computerized system 301 may also comprise standard memory, including hard disk 308, and cache memory (not represented) for storing cached, journaled and/or snapshot versions of other levels of each graph (e.g. not stored on the erasable main memory). By centralizing the important levels of the graphs on main memory, the management of deletion of objects is rendered easier.

The different means specific to the system, such as the key management means, may consist in a series of computer program instructions recorded e.g. on main memory 302, or e.g. on HDD 308 and importable on main memory 302, and making CPU 304 perform functions of such means. Notably, the computerized system may be configures so as to make CPU 304 perform the method of FIG. 2.

**Claims**

1. Computerized system (301) comprising:

   - a storage system (302, 308) storing objects and attribute values associated to the objects, wherein:

      • the attribute values are organized according to a set of N attribute types, N≥ 1, such that for each of said attribute types an object can be associated with an attribute value,
      • each of said attribute types is associated to a respective graph (30, 40),

         ∘ wherein each node of the respective graph is associated to a key , said key being

            ▪ wrapped with a key associated to a parent node of said each node except for a root node; and

▪ associated to one attribute value for the attribute type corresponding to the respective graph, and

• each of the objects is stored encrypted based on one or more keys, each of said one or more keys being associated to one attribute value that is associated with said each of the objects;

**characterized in that** it comprises
key management means (304) configured for deleting a key. wherein each object is encrypted based on at least two keys, each associated with respective attribute values of different types.

2. The computerized system of claim 1, wherein one of the attribute types corresponds to a filesystem tree mapped onto a filesystem of the computerized system, wherein each node of the filesystem tree is associated with:

- an attribute value uniquely identifying a directory or a file of the filesystem, such that said each nodes corresponds to a directory or a file of the filesystem; and
- a key wrapped with a key associated to a parent node of said each node except for a root node,

wherein,
files of the filesystem corresponding to respective leaf nodes of the filesystem tree are encrypted, each, based on a key associated to a respective leaf node of the filesystem tree.

3. The computerized system of claim 2, wherein said files of the filesystem corresponding to respective leaf nodes of the filesystem tree are encrypted, each, based on at least two keys, one of said two keys being associated to a respective leaf node of the filesystem tree and another one of said two keys being associated to another attribute type than that corresponding to the filesystem tree.

4. The computerized system of claim 1, wherein each object is encrypted using a single key, said single key being obtained based on said at least two keys.

5. The computerized system of claim 4, wherein each object is encrypted using a single key, said single key being obtained via a one-way function taking said at least two keys as input, such as a hash function of a concatenation of said at least two keys.

6. The computerized system of claim 1 - 5, wherein one of the attribute types corresponds to a user, such that distinct attribute values for this type correspond to distinct users.

7. The computerized system of claim 1 - 6, wherein one of the attribute types corresponds to time, such that distinct attribute values for this type preferably correspond to distinct years or distinct retention period.

8. The computerized system of claim 1-7, wherein each of the objects is stored encrypted based on an all-or-nothing transform, wherein a part of each of the objects is encrypted based on said one or more keys.

9. Method of securely managing objects stored in the computerized system according to claim 1 - 8, further **characterized by** comprising a step of deleting (S40) a keyv of a graph, thereby preventing from:
deriving again each of keys previously wrapped with the deleted key and accessing any object encrypted based on at least said deleted key.

10. The method of claim 9, further comprises steps, prior to the step of deleting (S40) of:

selecting (S10) a given node in a graph;
creating (S20) a new key distinct from the key associated so far with that node, for associating the new key with that node;
wrapping (S30) keys associated to child nodes of that node with the new key;
and wherein,
the step of deleting (S40) comprises deleting the key associated so far with that node.

11. Computer program comprising instructions for configuring a computerized system having a storage system as the computerized system of any of claims 1-8, or for performing the method of claim 10 or 9.

**12.** Data storage medium having recorded thereon the computer program of claim 11.

**Patentansprüche**

**1.** Computergestütztes System (301), umfassend:

- ein Speichersystem (302, 308), das Objekte und mit den Objekten assoziierte Attributwerte speichert, wobei:

• die Attributwerte gemäß einem Satz von N Attributtypen, N ≥ 1, organisiert werden, so dass für jeden der Attributtypen ein Objekt mit einem Attributwert assoziiert werden kann, wobei
• jeder der Attributtypen mit einem betreffenden Graphen (30, 40) assoziiert wird,

◦ wobei jeder Knoten des betreffenden Graphen mit einem Schlüssel assoziiert wird, wobei der Schlüssel

■ seinerseits noch einmal mit einem Schlüssel verschlüsselt wird, der, außer bei einem Stammknoten, mit einem Vaterknoten des jeweiligen Knotens assoziiert wird; und
■ mit jeweils einem Attributwert für den Attributtyp, der dem betreffenden Graphen entspricht, assoziiert wird, und

• jedes der Objekte verschlüsselt auf Basis eines oder mehrerer Schlüssel gespeichert wird, wobei jeder von d
• em einen oder den mehreren Schlüsseln mit jeweils einem Attributwert assoziiert wird, der mit dem jeweiligen Objekt assoziiert ist;

**dadurch gekennzeichnet, dass** es umfasst
- eine Schlüsselverwaltungseinrichtung (304); die dafür ausgelegt ist, einen Schlüssel zu löschen, wobei jedes Objekt auf Basis von mindestens zwei Schlüsseln verschlüsselt wird, von denen jeder mit betreffenden Attributwerten eines jeweils anderen Typs assoziiert ist.

**2.** Computergestütztes System nach Anspruch1, wobei einer der Attributtypen einem Dateisystembaum entspricht, der auf ein Dateisystem des computergestützten Systems abgebildet wird, wobei jeder Knoten des Dateisystembaums assoziiert wird mit:

- einem Attributwert, der ein Verzeichnis oder eine Datei des Dateisystems eindeutig identifiziert, so dass jeder Knoten jeweils einem Verzeichnis oder einer Datei des Dateisystems entspricht; und
- einen Schlüssel, der seinerseits noch einmal mit einem Schlüssel verschlüsselt wird, der, außer bei einem Stammknoten, mit einem Vaterknoten des jeweiligen Knotens assoziiert wird,

wobei
Dateien des Dateisystems, die betreffenden Blattknoten des Dateisystembaums entsprechen, jeweils auf Basis eines Schlüssels verschlüsselt werden, der mit einem betreffenden Blattknoten des Dateisystembaums assoziiert ist.

**3.** Computergestütztes System nach Anspruch 2, wobei die Dateien des Dateisystems, die betreffenden Blattknoten des Dateisystembaums entsprechen, jeweils auf Basis von mindestens zwei Schlüsseln verschlüsselt werden, wobei einer der beiden Schlüssel mit einem betreffenden Blattknoten des Dateisystembaums assoziiert wird und der andere von den beiden Schlüsseln mit einem anderen Attributtyp als dem, der dem Dateisystembaum entspricht, assoziiert wird.

**4.** Computergestütztes System nach Anspruch 1, wobei jedes Objekt unter Verwendung eines einzelnen Schlüssels verschlüsselt wird, wobei der einzelne Schlüssel auf Basis der mindestens zwei Schlüssel erhalten wird.

**5.** Computergestütztes System nach Anspruch 4, wobei jedes Objekt unter Verwendung eines einzelnen Schlüssels verschlüsselt wird, wobei der einzelne Schlüssel mittels einer Einwegfunktion erhalten wird, welche die mindestens zwei Schlüssel als Eingaben nimmt, beispielsweise mittels einer Streuwertfunktion einer Konkatenation der mindestens zwei Schlüssel.

**6.** Computergestütztes System nach Anspruch1-5, wobei einer der Attributtypen einem Benutzer entspricht, so dass unterschiedliche Attributwerte für diesen Typ unterschiedlichen Benutzern entsprechen.

7. Computergestütztes System nach Anspruch 1 - 6, wobei einer der Attributtypen einer Zeit entspricht, so dass unterschiedliche Attributwerte für diesen Typ vorzugsweise unterschiedlichen Jahren oder unterschiedlichen Aufbewahrungszeiträumen entsprechen.

8. Computergestütztes System nach Anspruch 1-7, wobei jedes der Objekte verschlüsselt auf Basis einer Alles-oder-nichts-Transformation gespeichert wird, wobei ein Teil von jedem der Objekte auf Basis des einen oder der mehreren Schlüssel verschlüsselt wird.

9. Verfahren zum sicheren Verwalten von Objekten, die in dem computergestützten System nach Anspruch 1-8 gespeichert werden, ferner **dadurch gekennzeichnet, dass** es einen Schritt des Löschens (S40) eines Schlüssels eines Graphen umfasst, wodurch verhindert wird, dass
einer der Schlüssel, der zuvor seinerseits mit dem gelöschten Schlüssel verschlüsselt worden ist, erneut abgeleitet wird, und
auf irgendein Objekt zugegriffen wird, das auf Basis von mindestens dem gelöschten Schlüssel verschlüsselt worden ist.

10. Verfahren nach Anspruch 9, ferner vor dem Schritt des Löschens (S40) die folgenden Schritte umfassend:

Auswählen (S10) eines gegebenen Knotens in einem Graphen;
Erzeugen (S20) eines neuen Schlüssels, der von dem Schlüssel, der bis dahin mit diesem Knoten assoziiert war, verschieden ist, um den neuen Schlüssel mit diesem Knoten zu assoziierten;
nochmaliges Verschlüsseln (S30) von Schlüsseln, die mit Kindknoten dieses Knotens assoziiert sind, mit dem neuen Schlüssel; und wobei
der Schritt des Löschens (S40) das Löschen des Schlüssels, der bis dahin mit diesem Knoten assoziiert war, umfasst.

11. Computerprogramm, Befehle zum Konfigurieren eines computergestützten Systems mit einem Speichersystem wie dem computergestützten System nach einem der Ansprüche 1-8 oder zur Durchführung des Verfahrens nach Anspruch 10 oder 9 umfassend. 9.

12. Datenspeichermedium, auf dem das Computerprogramm nach Anspruch 11 aufgezeichnet ist.

**Revendications**

1. Système informatisé (301) comprenant :

- un système de stockage (302, 308) stockant des objets et des valeurs d'attributs associées aux objets, où :

• les valeurs d'attributs sont organisées selon un ensemble de N types d'attributs, $N \geq 1$, de sorte que, pour chacun desdits types d'attributs, un objet peut être associé à une valeur d'attribut,
• chacun desdits types d'attributs est associé à un graphe respectif (30, 40),

○ où chaque noeud du graphe respectif est associé à une clé, ladite clé étant

■ enveloppée avec une clé associée à un noeud parent dudit chaque noeud, excepté pour un noeud racine ; et
■ associée à une valeur d'attribut pour le type d'attribut correspondant au graphe respectif, et

• chacun des objets est stocké encodé sur la base d'une ou de plusieurs clés, chacune desdites une ou plusieurs clés étant associée(s) à une valeur d'attribut qui est associée avec ledit chacun des objets ;

**caractérisé en ce qu'**il comprend des moyens de gestion de clé (304) configurés pour effacer une clé, où chaque objet est encodé sur la base d'au moins deux clés, chacune étant associée à des valeurs respectives d'attributs de différents types.

**2.** Système informatisé selon la revendication 1, dans lequel un des types d'attributs correspond à un arbre d'un système de fichiers reporté sur un système de fichiers du système informatisé, dans lequel chaque noeud de l'arbre du système de fichiers est associé à :

- une valeur d'attribut identifiant uniquement un répertoire ou un fichier du système de fichiers, de telle sorte que ledit chacun des noeuds correspond à un répertoire ou à un fichier du système de fichiers ; et
- une clé enveloppée avec une clé associée à un noeud parent dudit chaque noeud, excepté pour un noeud racine,

dans lequel
des fichiers du système de fichiers correspondant aux noeuds feuilles respectifs de l'arbre du système de fichiers sont encodés, chacun, sur la base d'une clé associée à un noeud feuille respectif de l'arbre du système de fichiers.

**3.** Système informatisé selon la revendication 2, dans lequel lesdits fichiers du système de fichiers correspondant aux noeuds feuilles respectifs de l'arbre du système de fichiers sont encodés, chacun, sur la base d'au moins deux clés, une desdites deux clés étant associée à un noeud feuille respectif du système de fichiers et une autre desdites deux clés étant associée à un autre type d'attribut que celui correspondant à l'arbre du système de fichiers.

**4.** Système informatisé selon la revendication 1, dans lequel chaque objet est encodé en utilisant une clé unique, ladite clé unique étant obtenue sur la base desdites au moins deux clés.

**5.** Système informatisé selon la revendication 4, dans lequel chaque objet est encodé en utilisant une clé unique, ladite clé unique étant obtenue via une fonction à sens unique qui prend lesdites au moins deux clés en tant qu'entrée, de la même manière qu'une fonction de hachage d'une concaténation desdites au moins deux clés.

**6.** Système informatisé selon les revendications 1 à 5, dans lequel un des types d'attributs correspond à un utilisateur, de sorte que des valeurs d'attributs distinctes correspondent à des utilisateurs distincts.

**7.** Système informatisé selon les revendications 1 à 6, dans lequel un des types d'attributs correspond au temps, de sorte que des valeurs d'attributs distinctes pour ce type correspondent de préférence à des années distinctes ou à une période de retenue distincte.

**8.** Système informatisé selon les revendications 1 à 7, dans lequel chacun des objets est stocké encodé sur la base d'une transformée en tout ou rien, où une partie de chacun des objets est encodée sur la base de ladite une clé ou desdites plusieurs clés.

**9.** Procédé de gestion sécurisée d'objets stockés dans un système informatisé selon les revendications 1 à 8, **caractérisé en outre par**
comprenant une étape d'effacement (S40) d'une clé d'un graphe, ce par quoi évitant :

d'extraire de nouveau chacune des clés préalablement enveloppée avec la clé effacée et
d'associer tout objet encodé sur la base d'au moins ladite clé effacée.

**10.** Procédé selon la revendication 9, comprend en outre les étapes, avant l'étape d'effacement (S40) :

de sélection (S10) d'un noeud donné dans un graphe ;
de création (S20) d'une nouvelle clé distincte à partir de la clé associée jusqu'alors à ce noeud, pour associer la nouvelle clé à ce noeud ;
d'enveloppement (S30) des clés associées à des noeud enfants de ce noeud avec la nouvelle clé ;
et où
l'étape d'effacement (S40) comprend l'effacement de la clé associée jusqu'alors à ce noeud.

**11.** Programme informatique comprenant des instructions pour configurer un système informatisé ayant un système de stockage sous la forme d'un système informatisé selon l'une quelconque des revendications 1 à 8, ou pour exécuter le procédé selon les revendications 10 ou 9.

**12.** Support de stockage de données sur lequel est enregistré le programme informatique selon la revendication 11.

FIG. 1

```
┌─────────────────────────────────────────────┐
│        Selecting a given node in a graph       │ ── S10
└─────────────────────────────────────────────┘
                        │
                        ▼
┌─────────────────────────────────────────────┐
│  Creating a new key distinct from the key      │
│  associated so far with that node              │ ── S20
└─────────────────────────────────────────────┘
                        │
                        ▼
┌─────────────────────────────────────────────┐
│  Wrapping keys associated to child nodes       │
│  of that node with the new key                 │ ── S30
└─────────────────────────────────────────────┘
                        │
                        ▼
┌─────────────────────────────────────────────┐
│  Deleting the key associated so far with       │
│  that node                                     │ ── S40
└─────────────────────────────────────────────┘
```

FIG. 2

K0

dir1
$(K01)_{K0}$

dir2
$(K02)_{K0}$

dir3
$(K03)_{K0}$

dir4
$(K04)_{K0}$

30

dir5
$(K011)_{K01}$

dir6
$(K012)_{K01}$

file1
$(K031)_{K03}$

dir7
$(K041)_{K04}$

file2
$(K0411)_{K041}$

FIG. 3

K0

tenant1
$(K'01)_{K'0}$

tenant2
$(K'02)_{K'0}$

tenant3
$(K'03)_{K'0}$

tenant4
$(K'04)_{K'0}$

40

user1
$(K'011)_{K'01}$

user2
$(K'012)_{K'01}$

user3
$(K'031)_{K'03}$

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090172265 A1, Park
- US 5584022 A1, Kikuchi
- JP 2000089991 A
- US 20090196417 A, Beaver

### Non-patent literature cited in the description

- **J. VIJAYAN.** Programmer who stole drive containing 1 million bank records gets 42 months. *Computer World,* 2008
- **D. SHARP.** Breach exposes 4.2 million credit, debit cards. Associated Press, 2008
- **J. EVERS.** Credit card breach exposes 40 million accounts. *CNET News,* 2005
- **P. GUTMAUN.** Secure deletion of data from magnetic and solid-state memory. *Proceedings of the 6th USENIX Security Symposium,* 1996, 77-89
- **M. WEI ; L. M. GRUPP ; F. M. SPADA ; S. SWANSON.** Reliably erasing data from flash-based solid state drives. *Proceedings of the 20th USENIX Security Symposium,* 2011
- **BAUER ; N. B. PRIYANTHA.** Secure data deletion for linux file systems. *Proceedings of the 10th conference on USENIX Security Symposium,* 2001, vol. 10, 12-12
- Secure deletion myths, issues, and solutions. **N. JOUKOV ; H. PAPAXENOPOULOS ; E. ZADOK.** Proceedings of the second ACM workshop on Storage security and survivability, StorageSS '06. ACM, 2006, 61-66
- Adding secure deletion to your favorite file system. **N. JOUKOV ; E. ZADOK.** Poceedings of the Third IEEE International Security in Storage Workshop. IEEE Computer Society, 2005, 63-70
- A revocable backup system. **D. BONEH ; R. J. LIPTON.** proceedings of the 6th conference on USENIX Security Symposium, Focusing on Applications of Cryptography. USENIX Association, 1996, vol. 6, 9-9
- Secure deletion for a versioning file system. **Z. N. J. PETERSON ; R. BUMS ; J. HERRING ; A. STUBBLEFIELD ; A. D. RUBIN.** proceedings of the 4th conference on USENIX Conference on File and Storage Technologies. USENIX Association, 2005, vol. 4, 11-11
- The ephemerizer: making data disappear. Technical report. Sun Microsystems, Inc, 2005
- File system design with assured delete. proceedings of the Third IEEE International Security in Storage Workshop. IEEE Computer Society, 2005, 83-88
- Vanish: increasing data privacy with self-destructing data. **R. GEAMBASU ; T. KOHNO ; A. A. LEVY ; H. M. LEVY.** proceedings of the 18th conference on USENIX security symposium, SSYM'09. USENIX Association, 2009, 299-3 16
- **A. SHAMIR.** How to share a secret. *Commun. ACM,* November 1979, vol. 22, 612-613
- **WOLCHOK ; HOFMANN ; HENINGER ; FELTEN ; HALDERMAN ; ROSSBACH ; WATERS ; WITCHEL.** Defeating Vanish with low-cost Sybil attacks against large DHTh. *proc. 17th Network and Distributed System Security Symposium (NDSS), ISOC,* February 2010
- How to forget a secret. **DI CRESCENZO ; N. FERGUSON ; R. IMPAGLIAZZO ; M. JAKOBSSON.** proceedings of the 16th annual conference on Theoretical aspects of computer science, STACS'99. Springer-Verlag, 1999, 500-509
- **D. GROLIMUND et al.** *Cryptree: A Folder Tree Structure for Cryptographic File Systems*
- All-or-nothing encryption and the package transform. *FSE,* 1997, 210-218
- **A. J. MENEZES ; P. C. VAN OORSCHOT ; S. A. VAUSTONE.** Handbook of Applied Cryptography. CRC Press, 2001